(19) Europäisches Patentamt
European Patent Office
Office européen des brevets

(11) **EP 1 013 521 B1**

(12) **EUROPÄISCHE PATENTSCHRIFT**

(45) Veröffentlichungstag und Bekanntmachung des Hinweises auf die Patenterteilung:
**06.03.2002 Patentblatt 2002/10**

(51) Int Cl.⁷: **B60T 7/22**, B60K 31/00

(21) Anmeldenummer: **99123876.7**

(22) Anmeldetag: **02.12.1999**

(54) **Verfahren und Vorrichtung zur Regelung der Fahrweise eines Kraftfahrzeuges**

Method and device for controlling the operation of a vehicle

Procédé et dispositif de regulation de la conduite d'un véhicule

(84) Benannte Vertragsstaaten:
**DE ES FR GB IT NL SE**

(30) Priorität: **23.12.1998 DE 19859743**

(43) Veröffentlichungstag der Anmeldung:
**28.06.2000 Patentblatt 2000/26**

(73) Patentinhaber: **MAN Nutzfahrzeuge Aktiengesellschaft**
**80976 München (DE)**

(72) Erfinder:
• **Schiehlen, Joachim, Dr.-Ing.**
**82110 Germering (DE)**
• **Schwertberger, Walter, Dipl.-Ing.**
**82278 Althegnenberg (DE)**
• **Jung, Christoph, Dipl.-Ing.**
**85757 Karlsfeld (DE)**
• **Hipp, Eberhard, Dipl.-Ing.**
**80798 München (DE)**

(56) Entgegenhaltungen:
EP-A- 0 453 760          DE-A- 19 712 802
US-A- 5 752 214          US-A- 5 944 766

• HIPP E ET AL: "INTELLIGENTE FAHRER-UNTERSTUETZUNG: DER ABSTANDSGEREGELTE TEMPOMAT" INTERNATIONALES VERKEHRSWESEN,DE,TETZLAFF VERLAG, DARMSTADT, Bd. 49, Nr. 7/08, 1. Juli 1997 (1997-07-01), Seiten 403-407, XP000724196 ISSN: 0020-9511
• PROTZEL P ET AL: "ABSTANDREGELUNG VON FAHRZEUGEN MIT FUZZY CONTROL" FUZZY LOGIC. THEORIE AND PRAXIS. DORDMUNDER FUZZY-TAGE, 7. Juni 1993 (1993-06-07), Seiten 212-221, XP000645972

**Beschreibung**

Die Erfindung betrifft ein Verfahren nach dem Oberbegriff des Anspruches 1 und eine Vorrichtung nach dem Oberbegriff des Anspruches 5.

Aus der DE 42 00 694 A1 ist das Zusammenwirken eines Geschwindigkeits- und Abstandsreglers eines Fahrzeuges bekannt.

Es ist weiterhin bekannt, daß durch einen abstandsgeregelten Tempomat, wenn der eingestellte Abstand unterschritten wird, eine Bremsung veranlaßt wird.

Die Anmelderin bietet in ihrem Fahrzeugprogramm zusätzlich zum Geschwindigkeitsregler einen Bremsomat an, der, wenn eine deutliche Überschreitung der eingestellten Geschwindigkeit im Geschwindigkeitsregler auftritt, eine automatische, geregelte Bremsung einleitet.

Der Bremsomat bremst geregelt das Fahrzeug bei Gefällestrecken mittels Bremseinrichtungen, die von ihm nach einem Programm nacheinander, je nach Bedarf und in der entsprechenden Bremswirkung (Motorbremse, Retarder, Betriebsbremse) eingelegt werden, damit die vom Fahrer eingestellte Wunschgeschwindigkeit eingehalten wird.

Im nachfolgenden Text ist mit "Bremse" die Auswahl der Bremsmittel und deren Wirkung durch den Bremsomat gemeint.

Aufgabe der Erfindung ist es, die bekannten Regler so einzusetzen, daß die Fahrweise des Fahrzeuges so gestaltet wird, als würde sie von einem guten Fahrzeugführer durchgeführt werden.

Die Aufgabe wird erfindungsgemäß durch die Merkmale der Ansprüche 1 und 5 gelöst.

Bei den bis heute bekannten Systemen zur Abstands- und Geschwindigkeitsregelung wird bei freier Fahrspur die Wunschgeschwindigkeit genau eingehalten. Bei sich abwechselnden Gefälle- und Steigungsstrecken regeln die genannten Regelsysteme die Geschwindigkeit ständig mit Bremsen und Beschleunigen. Ein Fahrer kann, wenn er ohne aktiviertes Regelsystem fährt, nie so genau seine Wunschgeschwindigkeit halten, aber er würde z. B. in kurzen Gefällestrecken (z. B. nach Brücken) keine Bremse einlegen. Ebenso würde er am Ende einer längeren Gefällestrecke durch Beenden einer Bremsung eine Geschwindigkeitserhöhung und/oder eine Abstandsverkürzung zum vorausfahrenden Fahrzeug zulassen. Dadurch spart er in erster Linie Treibstoff und schont die Reibungsbremsen.

Diese umweltfreundliche Fahrweise wird von den heutigen Regelsystemen nicht nachgebildet.

Zur Lösung der Aufgabe wird erfindungsgemäß ein System aus Geschwindigkeitsregler (GR), Bremsomat (BR), Abstandsregler (AR) gebildet, wobei für die Signalverarbeitung entweder zwei herkömmliche Abstandsregler (AR1, AR2) oder ein erweiterter Abstandsregler erforderlich ist.

Die bekannten Systeme

   a) Geschwindigkeitsregler (GR) und Bremsomat (BR) oder

   b) Geschwindigkeitsregler (GR) und Abstandsregler (AR) = Adaptive Cruise Control (ACC)

sind für das erfindungsgemäße Verfahren nicht ausreichend.

Im nachfolgenden Text werden auch die Abkürzungen GR, BR, AR1 und AR2 für die Regler verwendet.

Mit dem erfindungsgemäßen Verfahren und der Vorrichtung ist es nun möglich, daß durch das System selbst eine Überschreitung der eingestellten Geschwindigkeit und/oder eine Unterschreitung des Wunschabstandes zum vorausfahrenden Fahrzeug in gewissen Grenzen zugelassen wird.

Das erfindungsgemäße System hat den Vorteil, daß es bei kurzen Gefällestrecken eine erhöhte Geschwindigkeit $v_{Soll} + \Delta v$ und/oder einen verringerten Abstand $d_{Soll} - \Delta d$ zu einem vorausfahrenden Fahrzeug zuläßt. Dies hat einen flüssigeren Fahrstil als Erfolg.

Bei längeren Gefällestrecken läßt das System eine höhere Geschwindigkeit $v_{soll} + \Delta v$ und/oder einen kleineren Abstand $d_{Soll} - \Delta d$ zu.

Es ist aber auch möglich, wenn der Bordrechner aufgrund von Berriebswerten, oder wenn eine fahrzeuginterne Information besteht und/oder wenn ein Sensor zur Ermittlung der vertikalen Straßenkrümmung eingebaut ist, eine längere Gefällestrecke erkannt wird und wenn $v_{Soll} + \Delta v$ überschritten oder $d_{Soll} - \Delta d$ unterschritten wird, daß $v_{Soll}$ oder $d_{Soll}$ im Verlauf des Gefälles eingeregelt und wenn die Neigung des Gefälles geringer wird, durch das Regelsystem wieder $v_{Soll} + \Delta v$ und/oder $d_{Soll} - \Delta d$ zugelassen wird. Der Beginn des Endes eines längeren Gefälles kann im Normalfall dadurch erkannt werden, daß die Neigung des Gefälles dauernd geringer wird. Man könnte auch z. B. dann nur den Signalverlauf des Bremsomaten für die Bremse als Kriterium verwenden, um den Beginn des Endes eines Gefälles voraussagen zu können. Der Ort der Strecke, ab dem das Regelsystem die Werte $v_{Soll} + \Delta v$ oder $d_{Soll} - \Delta d$ zulassen, ist somit von Symptomen abgeleitet, die meistens zutreffend sind. Gelegentlich kann es noch zu z. B. einer weiteren Bremsung kommen.

Die Neigung des Gefälles kann über ein fahrzeuginternes Rechenmodell, das z. B. auch die Werte Fahrzeuggeschwindigkeit und -gewicht, Rollwiderstandsbeiwert, $c_w$-Wert, momentane Straßenneigung und Betriebswerte, wie momentanes Bremsmoment usw. in der Berechnung mit einbezieht, berechnet werden.

Wenn ein Sensor zur Ermittlung der vertikalen Straßenkrümmung installiert ist, kann in jedem Ausrüstungsstand des Fahrzeuges die Regelqualität bzw. die Vorhersage für einen weiteren Betriebsverlauf verbessert werden.

Eine fahrzeuginterne Information kann aber auch bereits ein Signal, z. B. der Bremsmomentverlauf über eine bestimmte Zeit sein, das als Information dem Regelsystem zugeführt wird.

Das erfindungsgemäße Regelsystem ist aus den genannten Gründen nur bedingt vorausschauend und die Wirkung hängt sehr vom Ausrüstungsstand des Fahrzeuges und weiterhin von dem Verlauf einer vertikalen Straßenkrümmung und, wenn sie installiert sind, der Genauigkeit eines dynamischen Rechenmodells und/oder der des Sensor für die Ermittlung der vertikalen Straßenkrümmung ab

Das nachfolgende Beispiel zeigt das Verhalten des erfindungsgemäßen Verfahrens und der Vorrichtung.

Das Fahrzeug befindet sich in der Ebene und hat kein vorausfahrendes Fahrzeug vor sich. Damit fährt es geschwindigkeitsgeregelt mit $v_{Soll}$. Das Fahrzeug kommt nun von der Ebene in ein Gefälle. Das benötigte Antriebsmoment wird immer geringer, bis es 0% wird. Die Auswahlschaltung MIN erhält vom GR den Wert 0 und vom AR1, der die Höhe des nötigen Antriebsmomentes zur Abstandsregelung angibt, den Wert 100% (kein vorausfahrendes Fahrzeug). Die Auswahlschaltung MIN wählt den kleineren dieser zwei Werte, also 0%, wodurch die Treibstoffzumessung auf 0 zurückgenommen wird. Wenn durch das Gefälle das Fahrzeug schneller wird. läßt die Regelung erfindungsgemäß $v_{Soll} + \Delta v$ zu. Wird $v_{Soll} + \Delta v$ geringfügig überschritten, so erhält der Bremsomat ein Signal, daß $v_{Soll} + \Delta v$ überschritten ist und gibt ein Signal, z. B. 2% erforderliches Bremsmomentes, an die Auswahlschaltung MAX. Weil kein vorausfahrendes Fahrzeug erkannt ist, bleibt von AR1 das Signal 100% an die Auswahlschaltung MIN, die den Wert nicht berücksichtigt. Von AR2, der die Höhe des Bremsmomentes zur Abstandsregelung angibt, geht aus dem gleichen Grund das Signal 0 an die Auswahlschaltung MAX, die den größeren von zwei eingehenden Werten, in diesem Fall 2% Bremsmoment aus der Überschreitung von $v_{Soll} + \Delta v$, das der Bremsomat für die Bremsung zugrunde legt.

Wenn nun ein langsameres vorausfahrendes Fahrzeug durch den Abstandssensor erkannt ist und die Regelung erfindungsgemäß eine Abstandsunterschreitung $d_{Soll} - \Delta d$ zuläßt, gibt AR2 erst dann ein Signal an die Auswahlschaltung MAX, wenn $d_{Soll} - \Delta d$ geringfügig unterschritten wird. Ist dieses Signal größer, als das Signal aus dem Bremsomat, so wird der größere Wert, z. B. 3% Bremsmoment aus dem AR2, für die Bremse zugrunde gelegt. Ein Signal aus dem AR1 an die Auswahlschaltung MIN ist unwirksam, da das Signal 0 aus dem GR vorliegt.

Wenn keine fahrzeuginterne Information installiert ist, wird, solange kein Antriebsmoment benötigt wird, immer eine erhöhte Geschwindigkeit $v_{Soll} + \Delta v$ und/oder ein verringerter Abstand $d_{Soll} - \Delta d$ zugelassen. Diese Werte werden dann mittels Signalen aus dem BR und/oder AR2, je nach dem, welches das höhere Signal ist, über die Auswahlschaltung MAX an die Bremse ausgegeben und eingehalten werden.

Wenn das Fahrzeug wieder in der Ebene fährt, so fährt es geschwindigkeitsgeregelt mit $v_{Soll}$, wenn kein vorausfahrendes Fahrzeug durch den Abstandsregler erkannt ist. Die Auswahlschaltung MIN erhält dann das Signal vom GR, z. B. erforderliches Antriebsmoment 60%. Vom AR1 erhält die Auswahlschaltung MIN 100% (kein vorausfahrendes Fahrzeug), womit die Auswahlschaltung MIN den kleineren der beiden Werte, also 60% Antriebsmoment, als Regelgröße für die Treibstoffzumessung weitergibt.

Wenn ein vorausfahrendes, z. B. ein geringfügig langsamer fahrendes Fahrzeug, durch den Abstandssensor erkannt ist, so wird die Antriebsleistung geringer sein, als dies bei geschwindigkeitsgeregelter Fahrweise ist. Aus dem AR1 wird dann ein niedrigerer Signalwert, z. B. 55% erforderliches Antriebsmoment, an die Auswahlschaltung MIN gehen, die dann den niedrigeren Wert der eingehenden Signale (60% aus dem GR, 55% aus dem AR1), also 55% erforderliches Antriebsmoment zur Weitergabe auswählt.

Wenn das Fahrzeug ohne fahrzeuginterne Information ausgerüstet ist, wird $v_{Soll}$ bei horizontalem Straßenverlauf eingeregelt und $v_{Soll} + \Delta v$ bei einem Gefälle durch die Regelung zugelassen. Bei längeren Gefällestrecken kann sich dabei $v_{Soll} + \Delta v$ einstellen und bei kürzeren Gefällestrecken wird durch den Bremsomat nicht gebremst, wenn $v_{Soll} + \Delta v$ nicht überschritten wird. Obwohl das Fahrzeug ohne Information ausgerüstet ist, kommt die vereinfachte Ausgestaltung der Regelung trotzdem der Fahrweise eines guten Fahrzeugführers sehr nahe.

Wenn das Fahrzeug über eine fahrzeuginterne Information verfügt, wie z. B. ein Rechenmodell des Fahrzeuges und/oder einen Sensor zur Ermittlung der vertikalen Straßenkrümmung oder auch nur Betriebswerte des Fahrzeuges bewertet und als Information verwendet, so kann auch eine stärkere und damit wahrscheinlich auch längere Gefällestrecke erkannt werden und wenn $v_{Soll} + \Delta v$ überschritten und/oder $d_{Soll} - \Delta d$ unterschritten wird, $v_{Soll}$ oder $d_{Soll}$ im Verlaufe des Gefälles eingeregelt werden. Wenn die Gefälleneigung dann geringer wird und/oder die Betriebswerte auf eine Verringerung des Gefälles schließen lassen, kann durch das Regelsystem wieder $v_{Soll} + \Delta v$ und/oder $d_{Soll} - \Delta d$ zugelassen werden.

Der Abstand zu einem vorausfahrenden Fahrzeug muß bei höherer Geschwindigkeit größer und kann bei geringerer Geschwindigkeit kleiner sein.

Bei allen ACC-Einrichtungen ist dem Fahrer die Möglichkeit der individuellen Abstandswahl geboten. Beispielsweise gibt es 3 Modi, die die Wahl der Abstände nach "nah", "mittel" und "weit" ermöglicht. Einen der Modi wählt der Fahrer, z. B. je nach Wetterlage oder Fahrzeugbeladung oder Straßenbeschaffenheit aus und stellt damit indirekt den Wunschabstand $d_{Soll}$ ein.

Als Beispiel für ein Abstandsgesetz sei hier genannt:

$$[m]d_{Soll} = T_z[sec] \cdot v[km/h] \cdot 3,6$$

Durch die Abstandsberechnung wird $d_{Soll}$ stets neu vorgegeben, wobei $T_z$ der Zeitabstand zwischen dem Heck des vorausfahrenden und dem Bug des eigenen Fahrzeuges ist und im Zeitabstand $T_z$ der vom Fahrer gewählte Abstandsmodus enthalten ist.

In dem erfindungsgemäßen Verfahren und der Vorrichtung hat der Abstandsregler immer Vorrang vor den anderen Reglern.

Die Fig. zeigt schematisch ein Ausführungsbeispiel der Erfindung.

Es bedeuten:

GR = Geschwindigkeitsregler (Tempomat),

BR = Geschwindigkeitsregler für die Bremse (Bremsomat),

AR1 = Abstandsregler 1* für Motor

AR2 = Abstandsregler 2* für Bremse

Die vier Regler haben einen gemeinsamen Integralanteil.

*Anmerkung:

Es könnten auch zwei Abstandsregler in einem Gehäuse oder ein erweiterter Abstandsregler mit der entsprechenden Signalverarbeitung und mit den entsprechenden Ein- und Ausgängen sein.

| | |
|---|---|
| MIN = | Auswahlschaltung, die den Minimalwert zweier Werte auswählt, |
| MAX = | Auswahlschaltung, die den Maximalwert zweier Werte auswählt, |
| d = | gemessener Abstand zum vorausfahrenden Fahrzeug, |
| $d_{Soll}$ = | Sollabstand zum vorausfahrenden Fahrzeug, |
| $v_{Tacho}$ = | Istgeschwindigkeit, |
| $v_{Soll}$ = | eingestellte Wunschgeschwindigkeit, |
| 11 Abstandssensor = | Radar, Lidar, mit Objekterkennung, Objektauswahl und Spurzuordnung. Der Sensor liefert den Abstand und die Geschwindigkeit des vorausfahrenden Fahrzeuges, |
| 12 Tacho = | Tachometer, |
| 13 Bedienung = | Tempomatbedienhebel und Abstandswahlschalter, |
| 14 Signal = | Auswertung der Einstellwerte (Geschwindigkeit und Abstand), |
| 15 Abstand = | Abstandsberechnung, errechnet den momentanen Sollabstand $d_{Soll}$, abhängig von der momentanen Fahrzeuggeschwindigkeit und dem Abstandsmodus (z. B. "nah", "mittel", "weit"), den der Fahrer eingestellt hat; |
| 16 $d_{Soll}$-$\Delta d$ = | Signalveränderung für den Abstand, der sich aus $d_{Soll}$ (=15) ergibt, verringert um die zulässige Abstandsunterschreitung $\Delta d$, |
| 17 $v_{Soll}$+$\Delta V$ = | Signalveränderung für die erhöhte Geschwindigkeit $v_{Soll} + \Delta v$, |

| 18 Motor = | ansteuerbare Elektronik der Treibstoffzumessung oder über den Bordrechner beeinflußbare Treibstoffzumessung, |
|---|---|
| 19 Bremse = | Betriebs- und/oder Dauerbremsen, |
| 20 = | fahrzeuginterne Information, die mindestens einen wichtigen Betriebswert, z. 8. den Bremsmomentverlauf dem Regelsystem als Information zuführt, |
| 21 = | Signalwert für Bremsmoment (in % von maximal), |
| 22 = | Signalwert für Antriebsmoment (in % von maximal), |
| 23 = | Signalwert für Bremsmoment (in % von maximal), |
| 24 = | Signalwert für Antriebsmoment (in % von maximal). |

Fährt das Fahrzeug in der Ebene geschwindigkeitsgeregelt, so ist $v_{Tacho}$ = $v_{Soll}$ und der Geschwindigkeitsregler GR gibt den Signalwert 24, z. B. 60% Antriebsmoment, an die Auswahlschaltung MIN. Bei dieser Fahrweise ist im Normalfall kein vorausfahrendes Fahrzeug durch den Abstandssensor 11 ermittelt. Der Abstandsregler AR1 gibt dann den Signalwert 22, in diesem Fall 100% an die Auswahlschaltung MIN, die dann den niedrigeren Signalwert, hier 60% Antriebsmoment, auswählt.

Wenn der Abstandssensor 11 ein vorausfahrendes Fahrzeug ermittelt, das z. B. eine niedrigere Geschwindigkeit hat, als das eigene, so wird durch den AR1 der vom Fahrer eingegebene, geschwindigkeitsabhängige Wunschabstand $d_{Soll}$ eingeregelt. Für diesen Vorgang und danach gibt der Abstandsregler AR1 ein Signal 22, z. B. 55%, an die Auswahlschaltung MIN. Die Auswahlschaltung MIN wählt das niedrigere zweier Signale (60% Signalwert 24, 55% Signalwert 22) und gibt dieses, in diesem Fall 55%, weiter an z. B. den Bordrechner, zum Verstellen des Antriebsmomentes am Motor 18.

In der Bedienung 13 stellt der Fahrer Wunschgeschwindigkeit $v_{Soll}$ und wählt damit indirekt den Wunschabstand $d_{Soll}$. Zur Abstandswahl stehen ihm z. B. die Modi "nah", "mittel", "weit" zur Verfügung.

Der Bremsomat BR gibt Signale 23 an die Auswahlschaltung MAX dann, wenn im Gefälle $v_{Soll}$ + $\Delta v$ überschritten wird. Die Auswahlschaltung MAX wählt aber erst dann das Signal 23 zur Weitergabe an die Bremse aus, wenn Signal 23 größer als Signal 21 aus dem AR2 ist. Dies ist immer dann der Fall, wenn kein vorausfahrendes Fahrzeug durch den Abstandssensor 11 ermittelt ist.

Der Sollabstand $d_{Soll}$ wird vom Fahrer mit der Bedienung 13 aus beispielsweise den Modi "nah", "mittel", "weit" ausgewählt und in der Signalauswertung 14 als Signal an die Abstandsberechnung 15 weitergegeben. Der Sollabstand $d_{Soll}$ wird in der Abstandsberechnung 15 laufend nach z. B. dem Abstandsgesetz

$$[m]d_{Soll} = T_z[\text{sec}] \cdot v\ [km/h]\ 3{,}6$$

der momentanen Geschwindigkeit $v_{Taho}$ angepaßt, wobei $T_z$ der Zeitabstand zwischen dem Heck des vorausfahrenden Fahrzeuges und dem Bug des eigenen Fahrzeuges bedeutet und der vom Fahrer eingestellte Abstandsmodus, den er aus den Modi z. B. "nah", "mittel", "weit" ausgewählt hat, in dem Zeitabstand $T_z$ enthalten ist.

Wenn der Sollabstand $d_{Soll}$ eingehalten werden soll, so geht aus der Abstandsberechnung 15 ein Signal $d_{Soll}$ an den AR1, der ein Signal 22 an die Auswahlschaltung MIN gibt, die z. B. über den Bordrechner die Treibstoffzumessung am Motor 18 beeinflußt. Bei einer Unterschreitung $d_{Soll}$ - $\Delta d$ des Sollabstandes $d_{Soll}$ wird in der Signalveränderung 16 der Signalwert von $d_{Soll}$ auf ein neues Signal ($d_{Soll}$ - $\Delta d$) verändert und in den AR2 eingegeben. Der AR2 formuliert ein Signal 21 an die Auswahlschaltung MAX, das abhängig von der Istgeschwindigkeit $v_{Tacho}$. der Geschwindigkeit $v_{Frernd}$ und dem Istabstand d eines vorausfahrenden Fahrzeuges ist und berücksichtigt, ob der Abstand $d_{Soll}$ - $\Delta d$ unterschritten ist oder nicht.

Mit der Bedienung 13 wird auch die Sollgeschwindigkeit $v_{Soll}$ eingestellt und in der Signalauswertung 14 als Signal $v_{Soll}$ an den GR und an den Geschwindigkeitsrechner 17 weitergegeben. Wenn bei Fahrt in der Ebene kein vorausfahrendes Fahrzeug durch den Abstandssensor 11 ermittelt ist, so fährt das Fahrzeug über den GR und Signalwert 24 geschwindigkeitsgeregelt.

Da eine Geschwindigkeitserhöhung $v_{Soll}$+ $\Delta v$ im Gefälle zulässig ist, wird normalerweise das Signal $v_{Soll}$ in der Signalveränderung 17 auf $v_{Soll}$ + $\Delta v$ erhöht und an den Bremsomat BR weitergegeben. Der Bremsomat formuliert dann ein Signal 23 an die Auswahlschaltung MAX, wenn die erhöhte Geschwindigkeit $v_{Soll}$ + $\Delta v$ überschritten wird:

In diesem Regelsystem wird bei Ereignissen, z. B. daß die Antriebsmomentanforderung aus dem Signalwert 24 auf 0% abfällt, zuerst eine erhöhte Geschwindigkeit $v_{Soll} + \Delta v$ und/oder ein geringerer Abstand $d_{Soll} - \Delta d$ zugelassen und keine Bremsung veranlaßt, so daß bei kurzen Gefällestrecken meistens keine Bremsung durch den Bremsomat BR erforderlich ist.

Auf längeren Gefällestrecken regelt sich im einfachsten Fall, also ohne fahrzeuginterne Information, eine erhöhte Fahrgeschwindigkeit $v_{Soll} + \Delta v$ und/oder ein verringerter Abstand $d_{Soll} - \Delta d$ ein, wenn ein vorausfahrendes Fahrzeug durch den Abstandssensor 11 erkannt ist.

Es ist aber auch möglich, durch eine fahrzeuginterne Information 20 eine Verbesserung der Regelung der Fahrweise des Kraftfahrzeuges zu erreichen. Durch die fahrzeuginterne Information 20 kann eine stärkere und wahrscheinlich auch längere Gefällestrecke im momentanen Fahrzustand erkannt und wenn $v_{Soll} + \Delta v$ überschritten und/oder $d_{Soll} - \Delta d$ unterschritten ist, eine Bremsung veranlaßt werden, um wieder $v_{Soll}$ und/oder $d_{Soll}$ einzuregeln, bis durch die fahrzeuginterne Information 20 ein baldiges Ende der Gefällestrecke erkannt wird. Dann kann durch das Regelsystem wieder $v_{Soll} + \Delta v$ und/oder $d_{Soll} - \Delta d$ zugelassen werden.

Die Fahrweise ist aber nur insofern vorausschauend, als Symptome, wie beispielsweise, daß längere Gefällestrecken gegen Ende des Gefälles flacher werden, als Basiswerte für das Regelsystem herangezogen werden. Mithilfe eines an Bord installierten, dynamischen Rechenmodells lassen sich dadurch, je nach Genauigkeit des Rechenmodells, die Voraussagen weiter verbessern.

Weiterhin kann ein Sensor zur Bestimmung der vertikalen Straßenkrümmung, alleine als Information verwendet, oder mit einem dynamischen Rechenmodell oder mit Betriebswerten verbunden werden und somit eine genauere und etwas vorausschauende Information erreicht werden.

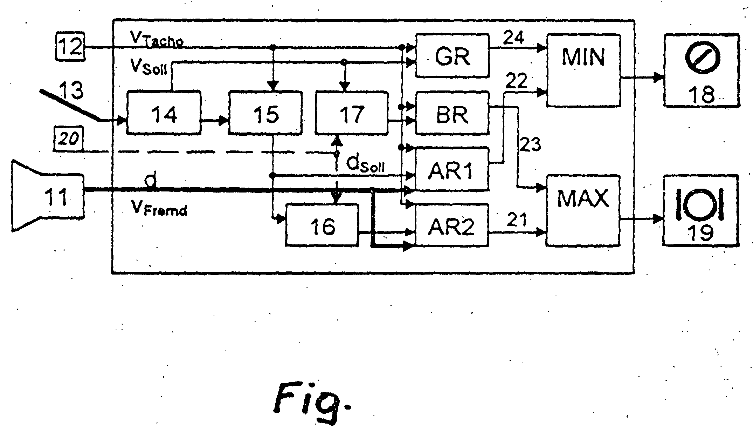

**Patentansprüche**

1. Verfahren zur Regelung der Fahrweise eines Kraftfahrzeuges, mit einem Geschwindigkeitsregler und einem Bremsomat oder mit einem Geschwindigkeits- und einem Abstandsregler und mit einem Bordrechner, der Betriebswerte gespeichert hat und sie für Regelvorgänge benutzt, gegebenenfalls mit einem fahrzeuginternen Informationssystem, das über ein dynamisches Rechenmodell des Fahrzeuges verfügen kann und gegebenenfalls mit einem Sensor zur Ermittlung der vertikalen Straßenkrümmung, **dadurch gekennzeichnet, daß** ein Regelsystem aus Geschwindigkeitsregler (GR), Bremsomat (BR) und einem erweiterten oder zwei herkömmlichen Abstandsreglern (AR1, AR2), abhängig von Betriebswerten des Fahrzeuges und gegebenenfalls einer fahrzeuginternen Information (20), eine Überschreitung ($+\Delta v$) der eingestellten Sollgeschwindigkeit ($v_{Soll}$) und/oder eine Unterschreitung ($d_{Soll} - \Delta d$) des Wunschabstandes ($d_{Soll}$) (geschwindigkeitsabhängig) zum vorausfahrenden Fahrzeug zuläßt.

2. Verfahren nach Anspruch 1, **dadurch gekennzeichnet, daß** in kurzen Gefällestrecken überhaupt keine Bremsung veranlaßt wird, wenn die erhöhte Geschwindigkeit ($v_{Soll} + \Delta v$) nicht überschritten und/oder der verringerte Wunschabstand ($d_{Soll} - \Delta d$) nicht unterschritten wird.

3. Verfahren nach Anspruch 1, **dadurch gekennzeichnet, daß** in Gefällestrecken eine Geschwindigkeitserhöhung ($v_{Soll} + \Delta v$) und/oder eine Abstandsverringerung ($d_{Soll} - \Delta d$) zugelassen wird.

4. Verfahren nach Anspruch 1, **dadurch gekennzeichnet, daß**, wenn eine fahrzeuginterne Information installiert ist, in längeren Gefällestrecken zu Beginn eines Gefälles die erhöhte Sollgeschwindigkeit ($v_{Soll} + \Delta v$), und/oder ein verringerter Wunschabstand ($d_{Soll} - \Delta d$) zugelassen wird, im weiteren Verlauf des Gefälles die Sollgeschwindigkeit $v_{Soll}$ und/oder der Wunschabstand $d_{Soll}$ eingeregelt wird und gegen Ende des Gefälles wieder ($v_{Soll} + \Delta v$) und/oder ($d_{Soll} - \Delta d$) zugelassen wird.

5. Vorrichtung zur Regelung der Fahrweise eines Kraftfahrzeuges, mit einem Geschwindigkeitsregler und einem Bremsomat oder mit einem Geschwindigkeits- und einem Abstandsregler und mit einem Bordrechner, der Betriebswerte gespeichert hat und sie für Regelvorgänge benutzt, gegebenenfalls mit einem fahrzeuginternen Informationssystem, das über ein dynamisches Rechenmodell des Fahrzeuges verfügen kann und gegebenenfalls mit einem Sensor zur Ermittlung der vertikalen Straßenkrümmung, **dadurch gekennzeichnet, daß** ein System aus Geschwindigkeitsregler (GR), Bremsomat (BR) und einem erweiterten oder zwei herkömmlichen Abstandsreglern (AR1, AR2) gebildet ist, das, abhängig von Betriebswerten des Fahrzeuges und gegebenenfalls einer fahrzeuginternen Information (20), Abweichungen von den eingestellten Sollwerten ($v_{Soll}$, $d_{Soll}$) zuläßt.

6. Vorrichtung nach Anspruch 5, **dadurch gekennzeichnet, daß** eine Auswahlschaltung (MIN, MAX) vor oder nach den Reglern (GR, BR, AR1, AR2) geschaltet ist, die über die Auswahl der Mittel (18, 19) für die Änderung des Fahrzustandes des Kraftfahrzeuges entscheidet.

## Claims

1. A process for regulating the driving behaviour of a motor vehicle, having a speed regulator and a Bremsomat unit, or having a speed regulator and a distance regulator, and having an on-board computer which has stored operating values and uses them for regulating procedures, where appropriate having an in-vehicle information system which can use a dynamic computer model of the vehicle, and where appropriate having a sensor for determining the vertical curvature of the road, **characterised in that** a regulating system comprising speed regulator (GR), Bremsomat unit (BR) and one expanded or two conventional distance regulators (AR1, AR2) permits, in dependence on operating values of the vehicle and where appropriate an in-vehicle item of information (20), the adjusted setpoint speed ($v_{set}$) to be exceeded and/or the distance to fall below ($d_{set} - \Delta d$) the desired distance ($d_{set}$) from the vehicle in front (as a function of speed).

2. A process according to Claim 1, **characterised in that** over short downward inclines no braking at all is triggered if the increased speed ($v_{set} + \Delta v$) is not exceeded and/or the distance does not fall below the reduced desired distance ($d_{set} - \Delta d$).

3. A process according to Claim 1, **characterised in that** over downward inclines an increase in speed ($v_{set} + \Delta v$) and/or a reduction in the distance ($d_{set} - \Delta d$) is permitted.

4. A process according to Claim 1, **characterised in that** if an in-vehicle item of information is installed, over relatively long downward inclines at the start of a downward incline the increased setpoint speed ($v_{set} + \Delta v$) and/or a reduced desired distance ($d_{set} - \Delta d$) is permitted, as the downward incline continues the setpoint speed $v_{set}$ and/or the desired distance $d_{set}$ is adjusted and towards the end of the downward incline once again ($v_{set} + \Delta v$) and/or ($d_{set} - \Delta d$) is permitted.

5. A device for regulating the driving behaviour of a motor vehicle, having a speed regulator and a Bremsomat unit, or having a speed regulator and a distance regulator, and having an on-board computer which has stored operating values and uses them for regulating procedures, where appropriate having an in-vehicle information system which can use a dynamic computer model of the vehicle, and where appropriate having a sensor for determining the vertical curvature of the road, **characterised in that** a system comprising speed regulator (GR), Bremsomat unit (BR) and one expanded or two conventional distance regulators (AR1, AR2) is formed which, in dependence on operating values of the vehicle and where appropriate an in-vehicle item of information (20), permits deviations from the adjusted setpoint values ($v_{set}$, $d_{set}$).

6. A device according to Claim 5, **characterised in that** a selector circuit (MIN, MAX) is switched before or after the regulators (GR, BR, AR1, AR2) and by selection of the means (18, 19) decides in favour of altering the driving state of the motor vehicle.

## Revendications

1. Procédé de régulation de la conduite d'un véhicule, à l'aide d'un régulateur de vitesse et d'un automate de freinage, ou d'un régulateur de vitesse et de distance et d'un ordinateur de bord, contenant des paramètres de fonctionnement et les utilisant pour les opérations de régulation, le cas échéant avec un système d'informations internes au véhicule, disposant d'un modèle de calcul dynamique du véhicule et le cas échéant d'un capteur pour déterminer la courbure verticale de la chaussée,
**caractérisé en ce qu'**
un système de régulation comprenant le régulateur de vitesse (GR), l'automate de freinage (BR) et un ou deux autres régulateurs de distance (AR1, AR2), en fonction des paramètres du véhicule et le cas échéant d'une information interne au véhicule (20), autorise un dépassement ($+\Delta v$) de la vitesse de consigne réglée ($v_{cons}$) et/ou un sous dépassement ($d_{cons} - \Delta d$) de la distance de consigne ($d_{cons}$) (dépendant de la vitesse) par rapport au véhicule qui précède.

2. Procédé selon la revendication 1,
**caractérisé en ce que**
sur de courtes distances il n'entraîne aucun freinage si la vitesse augmentée ($v_{cons} + \Delta v$) n'est pas dépassée et/ou si la distance ($d_{cons} - \Delta d$) n'est pas sous dépassée.

3. Procédé selon la revendication 1,
   **caractérisé en ce que**
   dans les descentes, on autorise une augmentation de vitesse ($v_{cons}$ + Av) et/ou une réduction de distance ($d_{cons}$ - $\Delta$d).

4. Procédé selon la revendication 1,
   **caractérisé en ce que**
   si une information interne au véhicule est installée, sur des descentes longues, au début d'une descente on autorise une vitesse de consigne augmentée ($v_{cons}$ + $\Delta$v) et/ou une distance de consigne diminuée ($d_{cons}$ - $\Delta$d) et au cours de la suite de la descente, on régule la vitesse de consigne ($v_{cons}$) et/ou la distance de consigne ($d_{cons}$) et vers la fin de la descente, on autorise de nouveau la vitesse de consigne augmentée ($v_{cons}$ + $\Delta$v) et/ou la distance de consigne diminuée ($d_{cons}$ - $\Delta$d).

5. Dispositif de régulation de la conduite d'un véhicule, comprenant un régulateur de vitesse et un automate de freinage, ou un régulateur de vitesse et un régulateur de distance et un calculateur de bord, contenant en mémoire des paramètres de fonctionnement et les utilisant pour les opérations de régulation, le cas échéant avec un système d'informations internes au véhicule disposant d'un modèle de calcul dynamique du véhicule et le cas échéant d'un capteur pour déterminer la courbure verticale de la chaussée,
   **caractérisé par**
   un système formé du régulateur de vitesse (GR), de l'automate de freinage (BR) et d'un ou deux autres régulateurs de distance usuels (AR1, AR2), et qui en fonction des paramètres du véhicule et le cas échéant d'une information interne au véhicule (20), autorise des déviations par rapport aux valeurs de consigne réglées ($v_{cons}$, $d_{cons}$).

6. Dispositif selon la revendication 5,
   **caractérisé en ce qu'**
   un sélecteur (MIN, MAX) précède ou suit les régulateurs (GR, BR, AR1, AR2) pour décider de la sélection des moyens (18, 19) pour modifier l'état de conduite du véhicule.

Fig.